# EUROPEAN PATENT SPECIFICATION

(11) **EP 1 729 595 B1**
(45) Date of publication and mention of the grant of the patent: **10.12.2008**
(21) Application number: 05707713.3
(22) Date of filing: 04.03.2005
(51) Int. Cl.: A23L 1/22, A23L 1/00, C13F 3/00, A23L 1/05, A23G 3/00

(54) **ARTIFICIAL FRUIT**
KÜNSTLICHE FRUCHT
FRUIT ARTIFICIEL

(30) Priority: 04.03.2004 EP 04005189
(43) Date of publication of application: 13.12.2006
(73) Proprietor: Gökhan, Cem, Dr., 60322 Frankfurt am Main (DE)
(72) Inventor: Gökhan, Cem, Dr., 60322 Frankfurt am Main (DE)
(74) Representative: Hart, Deborah Mary
(86) International application number: PCT/EP2005/002327
(87) International publication number: WO 2005/084457

(56) References cited:
- EP-A- 0 514 967
- EP-A- 0 909 824
- FR-A- 1 579 571
- GB-A- 331 295
- GB-A- 908 282
- GB-A- 2 391 449
- US-A1- 2003 134 012
- US-B1- 6 245 384

## Description

### Field of the Invention

The present invention describes an edible product comprising a core composition comprising sucrose and a shell or coating composition comprising at least one dietary fiber or polymer component, wherein the core composition is at least partially coated or encapsulated by the shell composition, a method of production of such an edible product, and its use.

### Background of the Invention

It is known that most common refined sugar is table sugar. Table sugar is sucrose, a disaccharide, consisting of glucose and fructose, purified in industrial scale e.g. from sugar beet or sugar cane. Herein sucrose is often referred to as 'Sugar'.

Fast digesting Sugar creates an insulin/cortisol surge and an impact on blood sugar level, it may inhibit fat metabolism. It therefore may contribute to metabolic (e.g. diabetes) and systemic (e.g. cardiovascular) diseases and dietary disorders (e.g. obesity).

On the other hand, it is known that Sugar has hygiene, practical and socio-political advantages: Sugar is a purified source of energy ( 4 calories per gram.) with cheap unrestricted and standardized availability, anywhere around the world. Sugar is a very (more than 99%) purified industrial product and therefore does not contain pollutants or impurities which may be harmful to health. Sugar production methods are well established and it is very easy to pack, store and transport. Sugar, readily dissolving in water, is very practical to use especially in the formats it is presented (i.e. powder, crystals, cubes, candis etc.). Sugar industry is huge, spread around the world and supports many people in the fields of agriculture, industry, and sales. Sugar and sugar industry may be the main income of some countries and is a major industry in most of the rest. Sugar, its use, its appearance and its taste is unquestionably known to all peoples of the world.

There is thus a need for an improved sucrose product which ameliorates or avoids the known disadvantages of Sugar without loosing the advantages of Sugar.

From the prior art, some modified Sugar containing products and methods thereof are known:

The fortitication/nutrification/enrichment of Sugar with micronutrients such as vitamin A (Nutriview 96/1) have been done, where in some cases peanut oil was used as binder and an antioxidant agent was used to protect the oil, in Guatemala, under USAID in cooperation with Roche AG. The fortification of food containing sugar with vitamin, Iron or Zinc has been disclosed in US G,G07,761; Calcium, too in US 4,87I,554.

Dietary fiber fortification of foods has also been disclosed in numerous prior art such as US 6,610, 347 and US 5,250,308 and US 6,060, 519.

Microencapsulation of sugar pellet with a fiber matrix containing a specific anti-fungal agent-to be administered as a pharmaceutical, has been disclosed in US 6,663,901. Encapsulation of sugar with edible fat is disclosed in US 3,976,794. Microencapsulation of vitamins and minerals with a matrix containing oligosaccharides, preferably fructooligosaccharides, has also been disclosed in US 6,468,568. Encapsulation with beta-glucan enriched oats is also known from FI914491.

EP0909824 describe a hydrophobic form of saccharose, which does not dissolve. The saccharose grains are coated with film forming polysaccharides or proteins.

FR 1579571 and GB 331,295 describes a modified form of sugar useful in the production of gels such as jams and jellies. The sugar is coated with pectin, and optionally an edible acid.

GB2391449 discloses the use of a hard coating for soft confection. The coating contains a crystalline polyol such as erythritol or mannitol.

A number of supplementary products are offered as a remedy for Sugar related health disadvantages, in oral administration-mostly powder-form. It was therefore an object of the present invention to provide a Sugar product which avoids or ameliorates disadvantages of the prior art.

The problem underlying the present invention was solved by an edible product according to the claims and furthermore as set out in the description below.

Thus it has been surprisingly found that the present invention provides an advantageous Sugar product:
which ameliorates or eradicates the aforementioned health disadvantages of Sugar, without loosing the aforementioned advantages of Sugar, which will provide further sole or synergetic advantages due to its composition and structure;
with organoleptic and physical properties equal or superior to Sugar, which can be, preferably, produced from natural raw materials by physical and mechanical means with no or minimal need for synthetic alteration or manipulation, of which-compositions and specifications can be designed and customized according to raw material cost/availability and consumer needs, which may be easy to produce.

The present invention therefore concerns an edible product, which may be considered as a kind of "artificial micro-fruit". Thus, in the first aspect the present invention provides dissolvable edible product comprising a solid shell encapsulating at least partially a core comprising sucrose, the product composition further comprising soluble dietary fiber, insoluble dietary fiber, phytonutrients and minerals wherein the said solid shell comprises at least one dietary fiber composition which has a lower Glycaemic Index than the corresponding amount of pure refined sucrose.

The product of the invention allows to combine the advantages of refined sugar as set out above with the advantages of a "build-up" of an artificial micro-fruit with a core and a shell. The edible product, in particular but not necessarily in its shell composition, may comprise additional components which, may also be present in the original source of sugar, the raw or dried fruits or vegetables, in particular minerals, proteins, enzymes (or enzyme inhibitors), all sorts of vitamins (including antioxidant agents), sugar alcohols(such as sorbitol, xylitol, mannitol, etc.), sugars in diversity (i. e. monosaccharides (such as glucose, fructose, galactose, arabinose, xylose, etc.), disaccharides (such as sucrose, maltose etc.), polysaccharides-including water insoluble and soluble fibers (such as cellulose, starch, pectin, gums. etc.) and/or natural or artificial sweeteners.

The edible product of the invention (hereafter referred to also as `Product', i.e. product of the invention) preferably is an artificial fruit, and has a core and shell structure. More than one core and/or more than one shell may be present. The core(s) may have any regular or irregular shape and any size. Preferred embodiments often include about spherical cores, e. g. sucrose crystals. Particularly preferred are sucrose crystals as commonly available as table sugar, i.e. with crystal diameters of between about 0.1 and 10 mm, or larger aggregates or shaped articles of sucrose, e.g. cube sugar, but also powder.

According to a preferred embodiment of the present invention, the core composition comprises more than 50. % by weight, more than 70 % by weight, more than 90 % by weight, preferably more than 95 wt-% or even more of sucrose. According to a particularly preferred embodiment, the core composition essentially (in particular more than 98wet-% or even more than 99wet-%) or completely consists of sucrose. The sucrose is preferably in solid particulate form, like crystalline sucrose. According to a particularly preferred embodiment of the present invention, the sucrose is present in the form of refined crystalline sucrose or table sugar, in particular purified white crystalline sugar. However, according to a further preferred embodiment of the present invention, the core is made of or comprises less refined sugar, in particular sugar with treacle or molasses. Also, a mixture of sugar and treacle or molasses may be advantageously used. The meaning of treacle or molasses is known to the skilled person. In brief, Treacle (or Fancy Molasses as it is popularly called), is a viscous, rich, dark brown color, concentrated sugarcane juice (syrup), manufactured by concentrating the fully matured tropical sugarcane stalks. Typical total solids are about 70 to 85%, the pH is typically between 4.5 to 5.5. The advantage of using such less refined sugar in the core is that less or even no additional components must be added to the dictary fiber containing shell, and the beneficial components in the less refined sugar (e.g. vitamins, probiotics etc.) are well embedded in the core-shell structure and at the same time readily available. According to a preferred embodiment of the present invention the said core is essentially comprised of sucrose and is encapsulated in or surrounded at least partially with a solid shell.

The said shell comprises at least one dietary fiber or polymer, preferably a water-soluble one. Preferably, at least one or more types of the dietary fibers are selected from the group of celluloses, hemicelluloses, gums, pentosans, glucans, including beta- glucan, mucilages and pectin, particularly water-soluble or water-dispersible dietary fibers, in particular beta-glucan and/or pectin. According to one embodiment of the present invention, synthetic and/or natural fibers (polysaccharides) may be used. This includes also the expanding field of so called modified starches or modified polysaccharides, e. g. starches or other polysaccharides which have been chemically modified to provide beneficial properties.

Particularily advantageous products are obtained if it further comprises an edible antioxidant agent or a plant extract with an antioxidant capacity, from at least a single plant source, such as but not limited to vegetables legumes, fruits, grain products, nuts and leaves. According to a preferred embodiment of the present invention Product's total Oxygen Radical Absorption Capacity (Wang *et al* 1996; Cao *et al* 1996 *;* Ou *et al* 2001) is not less then 1 ORAC units =1 1 micromol Trolox or gallic acid equivalent/gr.

Particularily advantageous products are obtained if it further comprises at least one water soluble vitamin, particularly B-complex vitamins. Preferably, the Product comprises at least one of the following: Thiamine or equivalent not less then 0.02mg/1000 KJoule, preferably not less than 0. 05 mg/1000 KJoule and Riboflavin or equivalent not less then 0.03 mg/1000 Kjoule, preferably not less than 0.07mg/1000 KJoule, and Niacin or equivalent not less then 0.04 mg/1000 KJoule, preferably not less than 0.08 mg/1000 KJoule, and Calcium not less then 5 mg/g, preferably not less then 15 mg/g of the total dictary fiber content.

Preferably, the said edible antioxidant agent being a carotenoid or a phenolic compound or an anthocyanin or a mineral or an (other) flavonoid or an aminoacid or a lipoic acid.

Preferably, the said product comprises additional components. These additional components may be in particular minerals, amino acids, enzymes, all sorts of vitamins and vitamin precursors (including antioxidant agents), sugar alcohols (c. g. sorbitol, mannitol) and sugars in diversity (monosaccharides (e. g. glucose, fructose, galactose, arabinose), disaccharides (e. g. sucrose, maltose) and polysaccharides).

Preferably, the said product has total dietary fiber content not less than 1% of its sugar content, has a caloric value lower than 4 calories per gram of its solid content and/or has a total lipid content lesser than weight/weight 2% of its total solid content.

Just like in natural fruits, the edible product of the present invention has several advantages:
Thus, the Product allows to combine the aforementioned advantages of Sugar with the advantages of dietary fibers. Moreover, it combines and enhances it with the advantages of antioxidants and with the advantages of B-complex vitamins which have been found-to act synergistically in the "structure" of the Product as an artificial micro-fiuit (or fruit) with core-shell structure. Preferably, the advantages of additional components in plant extracts may be added.

The Product has the advantage of ameliorating or avoiding the aforementioned health disadvantages of Sugar. Thus, even though it dissolves and tastes like sucrose, Product is found to have lesser Glycaemic Index than the corresponding amount of pure refined sucrose. This converts to a conclusion that: Product is not digested as rapidly as pure refined sugar and therefore does not cause the same insulin/cortisol surge (as Sugar does).

It was also unexpectedly observed that the Products with their core-shell composition may have a higher efficiency of Glycaemic Index lowering effect. Sucrose or another granulated/powdered carbohydrate core is a convenient carrier for the fiber, which allows it to gel (hydrate) very rapidly in water. The reason why the gelling is instant is that it exists as a thin film on the surface of the granule. The full functionality (gelling) of the fiber is therefore realised in seconds (instant) rather than the minutes or hours powdered aggregates normally require to reach maximum viscosity. The invention also avoids the issue of clumping and removes the need for high shear mixing to disperse the gelling agent (fiber). As the gelling is instant the full functionality (e.g. dissolving, taste) of sucrose is also realized without delay and the product looks and tastes like sugar. Therefore, one of the surprising advantages of the present invention can also be observed in the full functionality of the fiber (shell) and sucrose to be realised instantly without delay. Or it can be seen as although it is encapsulated it still looks, tastes and performs like sugar, which is surprising. This indicates that the core-shell structure is a more efficient structure of making use of the Glycaemic Index lowering effect of dietary fibers. This converts into a conclusion that: As Sugar is present with at least a soluble dietary fiber, preferably beta-glucan, in a core-shell structure, where Sugar is in the immediate vicinity of and surrounded by the instantly gelling dietary fiber, the digestion of Sugar core of Product is more efficiently inhibited by the said dietary fiber as the digestion of Sugar is related to the viscosity of the digestive medium it is in. Therefore, according to a preferred embodiment of the present invention, the fiber is in direct contact with the sucrose in the core and preferably the shell comprising the (dietary) fiber is very thin, in particular below 50 µm, preferably below 10 µm, more preferred below 5 µm, even more preferred below 1 µm, further preferred below 0.1 µm, further preferred below 0.05 µm.

The dietary fibers reduce the absorption of Sugar, furthermore B-complex vitamins increase the conversion of Sugar to energy in-vivo and antioxidants reduce the free radical forming and antioxidant reducing effects of Sugar. Therefore, according to one preferred embodiment of the invention they may be present and they may synergistically ameliorate the health disadvantages previously mentioned.

The above components of the Product of the invention, including the optional ones, are known to the person skilled in the art as such, however, they may be further illustrated as follows.

Dietary fibers are indigestible, sometimes fermentable polysaccharides, most commonly classified according to their water solubility. Soluble fibers are e.g. some hemicelluloses, variety of gums, pentosans, glucans, including beta-glucan, mucilages and pectin. Insoluble dietary fibers are e.g. cellulose and some hemicelluloses. The sole health advantages of both type of fibers and other componets are known:

Found in abundance plants especially in grain products and psyllium husk, soluble dietary fibers form a gel in the gastrointestinal tract, delaying the digestion of carbohydrates. They soften the faeces, ease and regulate the gastrointestinal passage. They bind to organic molecules, such as bile acids, they, especially beta-glucan (from oat products and psyllium husk), are cited for lowering the total and LDL blood cholesterol and being preventive for coronary heart disease and cancer of the gastrointestinal tract. Health benefits of soluble dietary fibers are also reported for diseases of pancreas including diabetis. There are also citations on immune system boosting effect of beta-glucan.

Insoluble dietary fibers also soften and add mass to faeces, inhibit the absorption of fats and speed the gastrointestinal passage. Insoluble fibers are associated with gastrointestinal tract cleaning and prevention of colon cancer.

Unstable radicals, such as peroxyl and hydroxyl, characterized with an atom with an unpaired electron in the orbit around the nucleus, are called free radicals and they have a known damaging oxidation effect. Substances which can neutralize free radicals are called antioxidants. Antioxidants are numerous and their list is enlarging every day. Antioxidants have known anti-cancerogenic, anti-aging and life quality rising effects. Glucose is known to increase free radicals and decrease the antioxidant capacity in blood. Plants, in particular fruits and vegetables, are known to be the richest sources of natural antioxidants.

B-complex vitamins: Vitamin B1 (Thiamine), viamin B2 (Riboflavin), vitamin B3 (Niacin), vitamin B5 (Pantothenic acid), vitamin H (Biotin), vitamin B6 (Pyridoxine), vitamin B9 (Folate), vitamine B12 (Cobalamin). In this list, especially vitamins listed from Vitamin B1 (Thiamin) through to Vitamin B6 (Pyrodoxine) are involved in Energy Metabolism and in particular carbohydrate metabolism. PABA, inositol and choline are often included in this group.

Vitamins are essential organic compounds that the body needs in small quantities for normal functioning. Among being essential for growth and health, some vitamins also have an antioxidant activity. Many compounds have been classified as vitamins. Vitamins A, D, E, and K, the four fat-soluble vitamins, may accumulate in the body. Vitamin C and the eight B vitamins - biotin, folate, niacin, pantothenic acid, riboflavin, thiamin, vitamin B6, and vitamin B12 - dissolve in water, so excess amounts are excreted. Vitamin precursors are inactive form of vitamins to be activated after ingestion. e.g. carotenes, flavin complexes, folates.

Phytonutrients are certain organic components of plants, and these components are thought to promote human health. Fruits, vegetables, legumes, grain products, nuts and leaves are rich sources of phytonutrients. The phytonutrients are also referred to as "phytochemical"s. Some of the common classes of phytonutrients include: Carotenoids, Flavonoids (Polyphenols) including Isoflavones, Inositol Phosphates (Phytates), Lignans (Phytoestrogens), Isothiocyanates and Indoles, Phenols, Saponins, Sulfides and Thiols, Terpenes. Phytonutrients are suggested to protect and enhance human health probably by means of serving as antioxidants, enhancing immune response, enhancing cell-to-cell communication, altering estrogen metabolism, converting to vitamin A (beta-carotene is metabolized to vitamin A), causing cancer cells to die (apoptosis), repairing DNA damage caused by smoking and other toxic exposures and detoxifying carcinogens through the activation of the cytochrome P450 and Phase II enzyme systems.

Amino acids are the building blocks of proteins and there are known amino acids which the human body cannot synthesize and therefore should be taken up by diet, most of which are found in high levels in plants, especially in legumes.

Enzymes have essential use in digestion. Natural extracts contain useful enzymes which may be beneficial in many ways. e.g. alpha amylase, a major enzyme in sucrose digestion, or its inhibitor can be extracted from plant sources.

Sugar alcohols (e.g. sorbitol) are sweet and low in calories, advised in diabetic diet and widely used as low calorie sweeteners. Sugar alcohols are digested less and slower than sugars. Sugar alcohols don't cause dental decay and may be inhibiting the pathogens of the mouth flora.

Minerals are classified in two groups.1-Macro minerals: Calcium and Phosphorus are essential for skeletal system. Sodium, Potassium and Chlorine are essential for hemostasis. 2-Micro (or trace) minerals: Magnesium, Manganese, Zinc, Iron, Copper, Iodine and Selenium are essential parts of enzymes, hormones or enzyme activators. Chromium is importand for metabolism.

Also, the Product has synergetic health advantages of the above essential and optional components of its composition:

Product composition particularly with the use of diversity of ingredients mimics the composition of plants, particularly of fruits. The composition of plants, particularly the composition of fruits, have synergetic effects which are advantageous for health. To name a few, human nutritional and cell culture studies link fruits and vegetable consumption to numerous health benefits, such as, to a decreased risk of stroke - both hemorrhagic and ischemic stroke (Gillman et al. Journal of the American Medical Association. 1995;273;1113); to about a 46% decrease in risk of heart disease relative to men who ranked in the lowest quartile; to about a 70% lower risk of cancer than did their counterparts in the lowest quintile (Gaziano et al. Annals of Epidemiology 1995;5:255 and Colditz et al. American Journal of Clinical Nutrition 1985;41:32); to a decreased risk of prostate cancer (Giovannucci et al. Journal of the National Cancer Institute 1995;87:1767); to a 46% decrease in risk of age-related macular degeneration compared to those in the lowest quintile who consumed vegetables less than once per month (Seddon et al. Journal of the American Medical Association. 1994;272:1413). Also, the association between fruit consumption and lowered cardiovascular hearth disease and lowered risk of cancer has been cited by FDA. Plant diets are widely known as a remedy to a number of diseases, including obesity.

Furthermore, the Product has the advantage of having organoleptic and physical properties equal or superior to Sugar. Thus, the Product can be produced from an abundant number of natural sources. According to one possible embodiment of the invention, a neutral (tasteless, odourless) natural extract can be choosen, in order to keep the organoleptic properties of the core content, sucrose, unaltered or alternatively the natural extract's taste and odour can be neutralized or alternatively a natural extract (such as apricot extract) or flavour components with a specific aroma can be used in the composition of Extract to improve the organoleptic properties of the core content, sucrose. The physical properties (e.g. flowability, solubility, texture and appearance as packed) of Product can also be kept similar to Sugar for unskilled person in art

The Product also has the advantage of not loosing the aforementioned known advantages of Sugar and has numerous industrial advantages. Thus, advantageously, the product can easily be produced from natural extract(s) by mechanical/physical means with processes known in the art.
Ingredients can be obtained from commercial sources, synthetic sources and/or from natural sources, in particular from plant sources, e.g. vegetables, legumes, fruits, grain products, nuts and leaves by mechanical/physical means with processes for obtaining the ingredients or Extract known in the art.
Advantageously, all the aforementioned components (e.g, dietary fibers, phytonutrients, minerals, amino acids, enzymes and sugar alcohols) do exist and coexist in diverse combinations in different plants, thus eliminating the industrial steps for purification/isolation of each component separately and then adding each one by one to the final composition. Product and production design therefore can be tailored according to raw material cost/availability and desired end-product specifications, bound to vary according to the location of the production plant.

The product, as discussed in detail later in this specification, has only 2 easy steps of production, i.e. preparation of Extract and encapsulation. The automation of production and minimizing environmental impact is easily archieveable. Advantageously, the cost of raw materials is a fraction of refined sucrose. Oat ( a good source of beta-glucan) for example costs ca 1/8th of refined sucrose. Advantageously, the Product can be produced from by-products of other industries including the sugar industry and beverage industry. Advantageously, the production of Product can easily be integrated to existing production lines ofmany industries including the sugar industry and starch industry. Advantageously, all by-products of the production (such as starch) can be commercialised, in most cases, with a higher value than the cost of raw materials.

Futhermore, the Product has structural 'solid core in solid shell' advantages

The structure of the artificial fruit with a core and a shell, comprising soluble dietary fibers, also presents the advantage of a solid, stable carrier matrix, enabling the addition and preservation of optional natural components (e.g. amin oacids, enzymes, minerals or antioxidants) which would be difficult to attach otherwise to sugar or which would otherwise be difficult to dose or stabilize. In fact, in nature, the said additional components, in diverse combination, coexist with each other within plant extract(s), which may be utilized within this invention, thus eliminating the need for nutrification / fortification. Advantageously, the shell may act as intermediate buffer in release of; especially, fragile molecules such as amino acids and enzymes where controlled release may be necessary.

Advantageously, the shell, having a natural composition therefore superiorly stable by nature and by being dry therefore organic reactions being at-least ceased, provides a dry protective matrix which improves the mechanical and chemical stability of Product and components, which otherwise would be or would become unstable for example with an oxidative reaction. A further advantage of the stable structure is its possible use as a vector for prophylactic and therapeutic agents, which would otherwise be difficult to dose, immobilize and stabilize over a naked Sugar surface.

Advantageously, by using colored substances, such as carotenoids, and aromatic substances and suitable tooling, Product can be produced in any form and in any colour and in any aroma or odour.

The product of the invention preferably does not contain a drug or medicament. According to a further embodiment, the shell does contain less than 90 wet-%, preferably less than 80 wt-%, more preferably less than 70 wt-%, even more preferably less than 60 wt-% and in particular less than 50 wt-% of pectin. According to a further embodiment, the shell does contain less than 90 wt %, preferably less than 80 wt-%, more preferably less than 70 wt-%, even more preferably less than 60 wt-% and in particular less than 50 wt-% of erythritol. Such amounts of erythritol may pose problems with retained moisture and humidity of the shell. Advantageously, the shell can be composed to carry indicators (e.g. pH indicator) to indicate the condition of the product or its component, e.g. regarding pH value; redox status, degradation products etc.

Another advantage of Product is to ameliorate or avoid known problems and disadvantages of natural fruits. Thus, it is known that fruits have disadvantages; Fruits are not produced but grown, therefore more condition dependant and less standardized to obtain compared to industrial products. Fruits are also difficult to pack, store and transport. Fruits have short shelf life (e.g. few days) in room conditions. Fruits are impractical to use (e.g. you cannot drop an apricot into your coffee or cannot mix an orange with flour and bake a cake). Some fruits may contain toxins, such as lectins. Fruits may be expensive. Fruits are not standardized.

The following paragraph discloses further preferred embodiments of the present invention which, if combined subsequently, have been found to give particularly advantageous products:

Dissolvable edible product comprising a solid shell encapsulating at least partially a core comprising sucrose, the product composition further comprising soluble dietary fiber, insoluble dietary fiber, phytonutrients and minerals wherein the said solid shell comprises at least one dietary fiber composition which has a lower Glycaemic Index than the corresponding amount of pure refined sucrose. The said product comprises an edible antioxidant agent or a plant extract with an antioxidant capacity, from at least a single plant source, such as but not limited to vegetables, legumes, fruits, grain products, nuts and leaves. The said product's total Oxygen Radical Absorption Capacity (Wang *et al* 1996; Cao *et al* 1996; Ou *et al* 2001) is not less then 1 ORAC units = Imicromol Trolox or gallic acid equivalent/gr., preferably not less then 2.6 ORAL units = 2. 6 micromol Trolox or gallic acid equivalent/gr. The said product comprises at least Thiamine or equivalent not less then 0.02 mg/1000 KJoule and Riboflavin or equivalent not less then 0.03 mg/1000 KJoule and Niacin or equivalent not less than 0. 04mg/1000 KJoule and Calcium not less then 6 mg/g of the total dietary fiber content. The product has a total dietary fiber content of not less than 1 % of its sugar content and a caloric value lower than 4 calories per gram of its solid content and a total lipid content less than 2% weight/weight of its total solid content.

Preferably, the dietary fiber composition comprises at least one or more types selected from the group of hemicelluloses, gums, pentosans, glueans, including beta-glucan, mucilages and pectin.
According to a preferred embodiment of the present invention, the core composition comprises or essentially consists of sucrose in solid state, either in crystalline form or granular form or particulate form or dried syrup form.

According to a preferred embodiment of the present invention, the core composition comprises or essentially consists of refined sucrose.

According to a preferred embodiment of the present invention, the core composition comprises or essentially consists of unrefined or semi-refined or molasses related sucrose in solid form.

According to a preferred embodiment of the present invention, the core composition comprises or essentially consists of sucrose obtained by enzymatic reactions or synthetically.

According to a preferred embodiment of the present invention, the core composition comprises or essentially consists of a single sucrose crystal or a single sucrose granule or a single sucrose particle.

According to a preferred embodiment of the present invention, the core composition comprises or essentially consists of more than one of sucrose crystal or granule or particle, attached or adjacent (glued or un-glued) to each other or to the shell.

According to a preferred embodiment of the present invention, the core composition comprises or essentially consists of sucrose in liquid or semi-solid state, either as a gel or in a saturated solution or in an unsaturated solution.

According to a preferred embodiment of the present invention, at least one dietary fiber is obtained from natural sources such as plant, bacteria, yeast, fungi, animal.

According to a preferred embodiment of the present invention, at least one of the dietary fiber types is artificially produced or obtained from genetically manipulated living sources or by chemical manipulation of carbohydrates.

According to a preferred embodiment of the present invention, at least one of the dietary fiber types is obtained from a multiple sources.

According to a preferred embodiment of the present invention, a plant extract ("Extract") is used for the shell composition and the said plant extract comprises also at least part of the dietary fibers and/or Thiamine and/or Riboflavin and/or Niacin and/or Calcium.

According to a preferred embodiment of the present invention; the product composition further comprises at least one or more additional components selected from the group of minerals, amino acids, enzymes, all sorts of vitamins and vitamin precursors (including antioxidant agents), sugar alcohols (e.g. sorbitol, mannitol) and sugars in diversity (monosaccharides (e.g. glucose, fructose, galactose, arabinose), disaccharides (e.g. sucrose, maltose) and polysaccharides).

According to a preferred embodiment of the present invention, the product composition further comprises at least one or more additional components selected from the group of colour indicators, pH indicators, colouring agents and aromatic agents.

According to a preferred embodiment of the present invention the product composition further comprises at least one or more additional components selected from the group of pharmaceutical and/or health improvement agents and/or nutrification/fortification agents.

According to a preferred embodiment of the present invention, the soluble dietary fiber component, particularly beta-glucan, is derived from either oat products, barley or psyllium husk.

According to a preferred embodiment of the present invention, the antioxidant agent is a carotenoid or a phenolic compound or an anthocyanin or a mineral or an other flavonoid or an amino acid or a lipoic acid.

According to a preferred embodiment of the present invention, the product composition further comprises at least one or more additional vitamins selected from the group of vitamins. Vitamins A, D, E, K, C, B6, B12, biotin, folate and pantothenic acid or their precursors sud/or PABA, inositol and choline.

According to a preferred embodiment of the present invention, the product composition further comprises at least one or more additional minerals selected from the group of minerals: Phosphorus, Sodium, Potassium, Chlorine, Magnesium, Manganese, Zinc, Iron, Copper, Iodine, Selenium and/or Chromium.

According to a preferred embodiment of the present invention, the sugar alcohol is sorbitol, in particular from prune.

According to a preferred embodiment of the present invention, the phytonutrients are selected from one or more of the following minerals: Carotenoids, Flavonoids (Polyphenols) including Isoflavones, Inositol Phosphates (Phytates), Lignans (Phytoestrogens), Isothiocyanates and Indoles, Phenols, Saponins, Sulfides and Thiols, Terpenes.

According to a preferred embodiment of the present invention, the core composition is encapsulated by the shell composition at least partially or the core composition is being packed into an edible case comprising the shell composition.

According to a preferred embodiment of the present invention, the core and the shell are attached to each other in such a way that neither core nor shell can move independent from each other.

According to a preferred embodiment of the present invention, the core and the shell are not attached to each other in such a way that the core and the shell can move independent from each other.

According to a preferred embodiment of the present invention, the shell composition is applied to the core composition by wet or dry coating of the shell composition onto the wet or dry core composition.

According to a preferred embodiment of the present invention, at least one essential component of the product composition other then sucrose is obtained from by-products of other industries, such as beverage and food industries, e.g. beer industry or starch industry.

According to a preferred embodiment of the present invention, the product composition has a reduced content of starches and lipids, in particular saturated lipids and substances harmful to health (c. g. intolarable substances (e. g. gluten), toxins (e. g.lectins)) or to product's organoleptic or physical or chemical qualities.

According to a preferred embodiment of the present invention, the product can be in any practical size, shape, colour, odour, texture, defending on the specific use envisaged.

According to a further aspect and possible embodiment of the invention, the present invention concerns a production process for a Product as defined above. A preferred process comprises the following steps:
(a) providing a core composition comprising sucrose,
(b) contacting the core composition with a shell composition comprising at least one dietary fiber composition, in order to apply the shell composition onto the core composition so that the core composition is at least partially surrounded by the shell composition.

It is particularily advantageous to use a shell composition which comprises an extract (herein "Extract") which is preferably derived from aqueous extraction of a natural source, like a fruit, plant, animal or microbiological source. Such an aqueous extract may preferably be obtained by obtaining the watersoluble components of a natural source, e. g. after grinding, milling, mixing with water, preferably at less than 100°C, and separation from the water-insoluble fraction, e. g. by filtration or centrifugation or the like. The extract may be further fractionated or components as specified above maybe added.

A preferred process is as defined in claim 39 below. Thus, according to a preferred embodiment, sugar particles (sucrose) are encapsulated with a soluble fiber containing extract. The process preferably comprises the following steps:
a) providing a core composition comprising sucrose, preferably refined sucrose in crystalline form
b) preparation of an extract, preferably of a plant source in milled or ground form, like a cereal flour, by mixing it with cold water (e.g. 0 to 4°C), ice/water mix or sprayed cold water (preferably reduced from soluble starches by means of the above removal of starches with ice-water mix and sprayed cold water), separation of a supernatant and a (residual) filtrate through a membrane filter or the like (centrifugation etc.). Thus, Recovery of soluble fibers from the supernatant and the starches from the precipitate to be further refined. It has been surprisingly found that the best Extracts (and shell compositions therefrom) are obtained if the above extraction is performed with an ice/water mix. Apparently, this helps to optimise the separation of the desired and undesired components into the supernatant and the (residual) filtrate, respectively.
c) advantageously, but optionally, extracting more soluble fibers from the filtrate using the supernatant as diluent and preferably homogenizing, membrane filtering under mild pressure and in RT. Surprisingly, this has been found to optimise the composition of the Extract to be used in the present invention
d) advantageously, but optionally, preparation of a second extract from a non-starch or low-starch containing plant source (i.e. not a starch storing plant source preferably in RT or blow by means of mixing and/or homogenizing in water base
e) optionally, mixing of the extracts
g) encapsulating the sucrose core into a solid shell, preferably by by means of recrystallizing sucrose in the prepared extract by continuously removing water from the sucrose containing mixture with the extract(s), or encapsulating the sucrose core into a solid shell made essentially of dietary fibers by means of spraying the extract from a fixed point to the continuous and circulating flow of sugar, in such a way that in each pass sugar particules are thin filmed once and immediately dried by the spray propellent dry, warm air. Therefore in each pass, the same sugar particule is re-sprayed an other layer of thin film, until the desired product specifications are achieved.

It has been surprisingly found that the above coating or encapsulation process (step i), second alternative) wherein more than one layer of the coating/shell is sprayed onto the core in more than one pass (one thin film layer per pass) is very beneficial to the stability of the shell composition. This surprising effect has been observed irrespective of the specific shell composition and core composition used. It is therefore of general interest and applicability as an encapsulation process (improvement) for all types of shell-core type composition.
i) optionally, recycling the water and vacuumed steam, using minimal heating short process time, no chemical extraction techniques therefore creating minimal environmental impact.

Advantageously, but optionally, all by-products are recovered in commercially value added manner and therefore no waste is produced.

In another production process, at least a soluble fiber (oat bran soluble-fiber, containing beta-glucan) and a sugar alcohol (sorbitol from prune) are used and a vitamin and/or an antioxidant agent (beta-carotene from prune or apricot) can be added to produce an all-natural, water-soluble and edible package material, either paper or plastic like.

Preferably, the shell composition is wet-coated over a dry core composition. Methods for applying or coating the shell composition onto/around the core composition are known to the expert in the art. Conventional mixing or coating equipment may be used.

The edible product of the invention may be considered as are-naturalized sugar. In other words, it is an artificial micro-fruit. It eliminates all the disadvantages of both refined sugar and natural fruits while combining the advantages of both.

The process of the invention is simply, cheap and dietary safe.

The embodiment of the present invention, wherein the core composition is packaged in a case or bag of the shell composition, allows a choice between using only a refined sugar (by opening and discarding the package material) or using re-naturalized sugar (by dropping the unopened package into e.g. a drink like tea or coffee). By combining refined sugar, soluble fibers and, optionally, additional components like vitamins, using the method defined herein, are-naturalizing of refined sugar can be achieved without diminishing the sensitive properties of table sugar.

A re-naturalized sugar will exhibit all the-combined-advantages of both refined sugars and fruits without compromising physical properties, taste and cost of the table sugar significantly. Moreover, all disadvantages will be ameliorated or eliminated.

Also surprising and undone before is the method of production according to the present invention: encapsulation of a wet or dry fiber component containing optionally sugar alcohol and vitamins onto dry sugar crystals, without loosing physical properties of sugar or clamping or dissolving.

A further aspect of the present invention is directed to an edible product for use as a replacement or alternative product to sucrose, in particular crystalline sucrose like table sugar said produce comprising a core composition comprising sucrose and a shell or coating composition comprising at least one dietary fiber component, wherein the core composition is at least partially coated or encapsulated by the shell composition, wherein said product has a lower glycaemic index than the corresponding amount of pure refined sucrose.
A preferred use is as an additive or ingredient to solid or liquid food, like coffee, tea or other drinks, bread, sweets, cold and warm meals, as a sweetener or the like. A method of using the edible product of the invention in an edible composition or recipe as a replacement for (conventional) sucrose, in particular crystalline sucrose like table sugar is also described. The preferred edible composition may be a solid or liquid food, like coffee, tea or other drinks, bread, sweets, cold and warm meals, in particular as a sweetener or the like.

In a further aspect the invention provides a method for preparing an edible product which has a lower Glycaemic Index than the corresponding amount of pure refined sucrose comprising coating at least partially a core composition comprising sucrose, with a coating composition comprising at least one dietary fiber.

The invention is now further illustrated by the following non-limiting example.

### EXAMPLE

The production of the Product comprises two main processes: 1- extraction, 2-microencapsulation or encapsulation. Extraction has two main types: extraction of soluble fibers and extraction of phytonutrients and water-soluble plant ingredients.

### Extraction of soluble fibers:

What is to be extracted from which natural source is a decision to be made according to the desired specifications of the final product. Given here is a general extraction procedure applicable to all grain products and legumes or to any plant source where the source is rich of both soluble fibers and starch. In cases where starch content is not a concern, the starch extraction steps can be omitted.
- Full oat grain was grounded to a flour with particle size of 400 micrometer or smaller.
- 100 g of said flour was placed in a homogenizer.
- 1000 cc of ice-water mix in 2 degrees C. was added to the homogenizer.
- Homogenized for 10 minute in 480 rpm in maintained 2-4 °C.
- Immediately filtered through a membrane filter with pore size of 200 micrometer under pressurized continuous spray water at 4 °C for approximately 10 minutes
- Filtrate suspended in 500 cc water at 40 °C for 5minutes with gentle stirring.
- Suspension centrifuged for 10 minutes.
- The supernatant liquid was used to encapsulate table sugar.
- Encapsulation was carried out in a heated pan by constant mixing of crystalline sugar with the supernatant liquid (extract) under blown warm dry air.

### Extraction of phytonutrients and water soluble plant ingredients:

What is to be extracted from which natural source is a decision to be made according to the desired specifications of the final product. Given here is a general extraction procedure applicable to all plants, raw or dry or processed.
- Prunes, deseeded, were rinsed in cold water and wiped dry to remove impurities and homogenized into a paste.
- 20 g of said paste was placed in a homogenizer.
- 200 cc of water in RT was added to homogenizer.
- Homogenized for 10 minutes in 2400+ rpm at RT.
- The slurry was filtered through a sieve with pore size of 160 micrometers under mild pressure.
- The filtrate was further proccessed as diet ingredient.
- The filtered liquid was evaporated in RT under vacuum to 50 cc and was immediately homogenized with dietary fiber extract and 30 mg of Calcium in RT.

Higher temperatures (over 60 degrees C) will start the gelatinisation of starches and therefore will increase the carbohydrate content and the caloric value of the extract.
Lowering the temperature will result in less solubilization and therefore less fiber content in the extract.
Different extracts obtained with above process will be compatible with each other. So, they can be mixed in pre-determined ratio, using a homogenizer, e.g. in 3.600 rpm and in RT for 4 minutes.
In case of raw plant use, the dilution value should be altered according to the water content of the source using the samples above for dry weigth to volume ratio, 1:20 for oat and 1:10 for prune.
Final ratios should be adjusted according to desired end product specifications.
In all cases the total process time should be kept as short as possible and further attention should be given to process time, which happens to be the transitional time for componets between their natural state and dry state.
The final plant extracts prepared as above were immediately used for encapsulation.

### The encapsulation:

Three methods were used. Known apparatus and methods familiar to the skilled person may be used.

### Method 1:

The aforementioned 120 cc final extract was further evaporated to 60 cc under vacuum and mixed to 200 gr of commercially available crystalline sucrose either in a continuous mixer under vacuum until dry again or placed in molds and dried to harden in different shapes such as cube.

### Method 2:

The aforementioned 120 cc final extract was sprayed to 200 gr of commercially available crystalline sucrose using dry, pressurized air in 35 degrees C. The sugar was constantly circulated through the spray zone and dried with 35 degrees C. dry air in between each pass.
This method can also be used for pre-formed Sugars such as cube sugar.

### Method 3:

Alternatively the final extract can be sprayed and dried in sheet format, to be used as an edible packing film, in this case presence of sugar alcohols in concentrations above 0.5% will plasticize the film and increase the tensile strength.

## Claims

1. Dissolvable edible product comprising a solid shell encapsulating at least partially a core comprising sucrose, the product composition further comprising soluble dietary fiber, insoluble dietary fiber, phytonutricnts and minerals wherein the said solid shell comprises at least one dietary fiber composition, which has a lower Glycaemic Index than the corresponding amount of pure refined sucrose.

2. Product according to claim 1, wherein components present in the original source of the sugar apart from the sucrose, are present in the edible product.

3. Product according to claim 1 or claim 2, wherein said mineral is selected from the group of minerals: Phosphorus, Sodium, Potassium, Chlorine, Magnesium, Manganese, Zinc, Iron, Copper, Iodine, Selenium and/or Chromium.

4. Product according to any one of claims 1-3 further comprising at least one or more additional vitamins selected from the group of vitamins: Vitamins A, D, E, K, C, B6, B12, biotin, folate and pantothenic acid or their precursors and/or PABA, inositol and choline.

5. Product according to claim 4, **characterized in that** said product further comprises an edible antioxidant agent or a natural extract, preferably a plant extract with an antioxidant capacity, from at least a single plant source.

6. Product according to claim 5, **characterized in that** the plant source is selected from vegetables, legumes, fruits, grain products, nuts and leaves. °

7. Product according to any one claims 1 to 6, **characterized in that** the said product's total Oxygen Radical Absorption Capacity is not less then IORAC units =1 micromol Trolox or gallic acid equivalent/gr.

8. Product according to any one of claims 1 to 7, **characterized in that** said product further comprises at least Thiamine or equivalent not less then 0.02 mg/1000 KJoule, Riboflavin or equivalent not less then 0.03 mg/1000 KJoule and Niacin or equivalent not less then 0.04 mg/1000 KJoule and/or Calcium not less then 5 mg /g of the total dietary fiber content.

9. Product according to any one of claims 1 to 8, **characterized in that** the total dietary fiber content is not less than 1% of the sugar content of the product.

10. Product according to any one of claims 1 to 9, **characterized in that** it has a caloric value lower than 4 calories per gram of its solid content and a total lipid content of less than 2%weight/weight of its total solid content.

11. Product according to any one of claims 1 to 10, **characterized in that** the dietary fiber composition comprises at least one or more types selected from the group of hemicelluloses, gums, pentosans, glucans, including beta-glucan, mucilages and pectin.

12. Product according to any one of claims 1 to 11, **characterized in that** the core composition comprises or essentially consists of sucrose in solid state, either in crystalline form or granular form or particulate form or dried syrup form.

13. Product according to any one of claims 1 to 12, **characterized in that** the core composition comprises or essentially consists of a single sucrose crystal or a single sucrose granule or a single sucrose particle.

14. Product according to any one of claims 1 to 12, **characterized in that** the core composition comprises or essentially consists of lumps of sucrose crystals or granules or particles, glued or un-glued to each other or to the shell.

15. Product according to any one of claims 1 to 11, **characterized in that** the core composition comprises or essentially consists of sucrose in liquid or semi- solid state, either as a gel or in a saturated solution or in an unsaturated solution.

16. Product according to any one of claims 1 to 15, **characterized in that** the core composition comprises or essentially consists of refined sucrose.

17. Product according to any one of claims 1 to 15, **characterized in that** the core composition comprises or essentially consists of unrefined or semi-refined or molasses related sucrose in solid form.

18. Product according to any one of claims 1 to 17, **characterized in that** the core composition comprises or essentially consists of sucrose obtained by enzymatic reactions or synthetically.

19. Product according to any one of claims 1 to 18, wherein at least one dietary fiber is obtained from natural sources such as plant, bacteria, yeast, fungi, animal.

20. Product according to any one of claims 1 to 18, wherein at least one of the dietary fiber types is artificially produced or obtained from genetically manipulated living sources or by chemical manipulation of carbohydrates:

21. Product according to any one of claims 1 to 20, wherein at least one of the dietary fiber types is obtained from multiple sources.

22. Product according to any one of claims 5 to 21, **characterized in that** the said plant extract comprises also at least part of the dietary fibers and/or Thiamine and/or Riboflavin and/or Niacin and/or Calcium.

23. Product according to any one of claims 1 to 22, **characterized in that** the product composition further comprises at least one or more additional components selected from the group of amino acids, enzymes, all sorts of vitamins and vitamin precursors (including antioxidant agents), sugar alcohols (c. g. sorbitol, mannitol) and sugars in diversity (monosaccharides (e. g. glucose, fructose, galactose, arabinose), disaccharides (e.g. sucrose, maltose) and polysaccharides).

24. Product according to any one of claims 1 to 23, **characterized in that**, the product composition further comprises at least one or more additional components selected from the group of colour indicators, including pH indicators, colouring agents and aromatic agents.

25. Product according to any one of claims 1 to 24, **characterized in that** the product composition further comprises at least one or more additional components selected from the group of pharmaceutical and/or health improvement agents and/or nutrification/fortification agents.

26. Product according to any one of claims 1 to 25, **characterized in that** the soluble dietary fiber component, particularly beta-glucan is derived from either oat products, barley or psyllium husk.

27. Product according to any one of claims 5 to 26 wherein the antioxidant agent being a carotenoid or a phenolic compound or an anthocyanin or a mineral or an (other) flavonoid or an amino acid or a lipoic acid.

28. Product according to any one of claims 23 to 27, wherein the sugar alcohol is sorbitol, in particular from prune.

29. Product according to any one of claims 1 to 28, wherein the phytonutrients are selected from one or more of the following minerals: Carotenoids, Flavonoids (Polyphenols) including Isoflavones, Inositol Phosphates (Phytates), Lignans (Phytoestrogens), Isothiocyanates and indoles, Phenols, Saponins, Sulfides and Thiols, Terpenes.

30. Product according to any one of claims 1 to 29, **characterized in that** the core composition is encapsulated by the shell composition at least partially or the core composition is being packed into an edible case comprising the shell composition.

31. Product according to any one of claims 1 to 29, **characterized in that** the core and the shell are attached to each other in such a way that neither core nor shell can move independent from each other.

32. Product according to any one of claims 1 to 29, **characterized in that** the core and the shell are not attached to each other in such a way that the core and the shell can move independent from each other.

33. Product according to any one of claims 1 to 32, **characterized in that** the shell composition is applied to the core composition by wet or dry coating of the shell composition onto the wet or dry core composition.

34. Product according to any one of claims 1 to 33, **characterized in that** at least one essential component of the product composition other than sucrose is obtained from by-products of other industries, such as beverage and food industries, e. g. beer industry or starch industry.

35. Product according to any one of claims 1 to 34, **characterized in that** the product composition further comprises at least one natural or artificial sweetener.

36. Product according to any one of claims 1 to 15 or 17 to 35, **characterized in that** the core comprises or is made from less refined sugar comprising treacle and or molasses, or a mixture of highly refined sugar and treacle and/or molasses.

37. Product according to any one of claims 1 to 36 wherein the insoluble and/or soluble dietary fibre are obtained from the original source of the sugar.

38. A process for preparing a product as claimed in any of claims 1 to 37 comprising the following steps:
(a) providing a core composition comprising sucrose,
(b) contacting the core composition with a shell composition comprising at least one dietary fiber composition, in order to apply the shell composition onto the core composition so that the core composition is at least partially surrounded by the shell composition.

39. Process for preparing a product as claimed in any of claims 1 to 37, comprising the following steps:
a) providing a core composition comprising sucrose, preferably refined sucrose in - crystalline form
b) preparation of an extract, preferably of a plant source in milled or ground form, like a cereal flour, by mixing it with cold water (e.g. 0 to 4°C), ice/water mix or sprayed cold water, separation of a supernatant and a (residual) filtrate through a membrane filter or by centrifugation
c) advantageously, but optionally, extracting more soluble fibers from the filtrate using the supernatant as diluent and preferably homogenizing, membrane filtering under mild pressure and in RT
d) advantageously, but optionally, preparation of a second extract from a non-starch or low-starch containing plant source (i.e: not a starch storing plant source), preferably in RT or blow by means of mixingand/or homogenizing in water base
e) optionally, mixing of the extracts
g) encapsulating the sucrose core into a solid shell, preferably by means of recrystallyzing sucrose in the prepared extract, or encapsulating sucrose core into a solid shell made of essentially dietary fibers by means of spraying the extract from a fixed point to the continuous and circulating flow of sugar, in such a way that in each pass sugar particules are thin filmed once and immediately dried by the spray propellent dry, warm air, and in each pass, the same sugar particule is re-sprayed with another layer of thin film coating, until the desired product specifications are achieved
i) optionally, recycling the water and vacuumed steam, using minimal heating, short process time, no chemical extraction techniques therefore creating minimal enviromental impact.

40. An edible product for use as a replacement or alternative product to sucrose, in particular crystalline sucrose like table sugar, said product comprising a core composition comprising sucrose and a shell or coating composition comprising at least one dietary fiber component, wherein the core composition is at least partially coated or encapsulated by the shell composition, wherein said product has a lower glycaemic index than the corresponding amount of pure refined sucrose.

41. Product according to claim 40 wherein said product is used as an additive or ingredient to solid or liquid food, like coffee, tea or other drinks, bread, sweets, cold and warm meals, as a sweetener or the like,

42. Product according to claim 40 or claim 41 wherein said product is a product as defined in claims 1 to 37.

43. A method for preparing an edible product which has a lower Glycaemic Index than the corresponding amount of pure refined sucrose comprising coating at least partially a core composition comprising sucrose, with a coating composition comprising at least one dietary fiber.

44. The method of claim 43 wherein said dietary fiber is selected from soluble dietary fiber and/or insoluble dietary fiber.

45. The method of claim 43 or claim 44 wherein said dietary fiber is a natural dietary fiber.

46. The method of any one of claims 43-45 wherein the composition further comprises phytonutrients and/or minerals.

47. The method of any one of claims 43-46 wherein components present in the original source of the sugar apart from the sucrose are present in the coating composition.

48. The method of anyone of claims 43-47 wherein the insoluble and/or soluble dietary fibre are obtained from the original source of the sugar.

## Patentansprüche

1. Auflösbares essbares Produkt, umfassend eine feste Hülse, welche einen Sucrose umfassenden Kern mindestens teilweise einkapselt, wobei die Produktzusammensetzung ferner löslichen Ballaststoff, unlöslichen Ballaststoff, Phytonährstoffe und Mineralien umfasst, worin die besagte feste Hülse mindestens eine Ballaststoffzusammensetzung umfasst, welches einen niedrigeren glykämischen Index hat, als die entsprechende Menge an reiner raffinierter Sucrose.

2. Produkt gemäß Anspruch 1, worin in der ursprünglichen Quelle des zuckers vorhandene Bestandteile abgesehen von der Sucrose in dem essbaren Produkt vorhanden sind.

3. Produkt gemäß Anspruch 1 oder Anspruch 2, worin besagtes Mineral ausgewählt ist aus der Gruppe von Mineralien: Phosphor, Natrium, Kalium, Chlor, Magnesium, Mangan, Zink, Eisen, Kupfer, Iod, Selen und/oder Chrom.

4. Produkt gemäß einem von Ansprüchen 1-3, welches ferner mindestens ein oder mehrere zusätzliche Vitamine umfasst, ausgewählt aus der Gruppe von Vitaminen: Vitamine A, D, E, K, C, B6, B12, Biotin, Folat und Pantothensäure oder ihren Vorläufern und/oder PABA, Inositol und Cholin.

5. Produkt gemäß Anspruch 4, **dadurch gekennzeichnet, dass** besagtes Produkt ferner ein essbares Antioxidationsmittel oder ein natürliches Extrakt, vorzugsweise ein pflanzliches Extrakt mit einer Antioxidans-Kapazität aus mindestens einer einzelnen pflanzlichen Quelle umfasst.

6. Produkt gemäß Anspruch 5, **dadurch gekennzeichnet, dass** die pflanzliche Quelle ausgewählt ist aus Gemüse, Hülsenfrüchten, Früchten, Getreideprodukten, Nüssen und Blättern.

7. Produkt gemäß einem von Ansprüchen 1 bis 6, **dadurch gekennzeichnet, dass** die gesamte Absorptionskapazität für Sauerstoffradikale (Oxygen Radical Absorption Capacity) des besagten Produkts nicht geringer als 1 ORAC-Einheiten = 1 Mikromol Trolox oder Gallussäure-Äquivalent/Gr. Ist.

8. Produkt gemäß einem von Ansprüchen 1 bis 7, **dadurch gekennzeichnet, dass** besagtes Produkt ferner mindestens Thiamin oder Äquivalent von nicht weniger als 0,02 mg/1000 Kjoule, Riboflavin oder Äquivalent von nicht weniger als 0,03 mg/1000 Kjoule und Niacin oder Äquivalent von nicht weniger als 0,04 mg/1000 Kjoule und/oder Calcium von nicht weniger als 5 mg/g des gesamten Ballaststoffgehalts umfasst.

9. Produkt gemäß einem von Ansprüchen 1 bis 8, **dadurch gekennzeichnet, dass** der gesamte Ballaststoffgehalt nicht geringer als 1% des Zuckergehalts des Produkts ist.

10. Produkt gemäß einem von Ansprüchen 1 bis 9, **dadurch gekennzeichnet, dass** es einen kalorischen Wert niedriger als 4 Kalorien pro Gramm seines festen Gehalts und einen Gesamtlipidgehalt von weniger als 2% Gewicht/Gewicht seinen Gesamtfeststoffgehalts hat.

11. Produkt gemäß einem von Ansprüchen 1 bis 10, **dadurch gekennzeichnet, dass** die Ballaststoffzusammensetzung mindestens einen oder mehrere Typen umfasst, ausgewählt aus der Gruppe von Hemicellulosen, Gummis, Pentosanen, Glucanen einschließlich Beta-Glucan, Schleimstoffen und Pektin.

12. Produkt gemäß einem von Ansprüchen 1 bis 11, **dadurch gekennzeichnet, dass** die Kernzusammensetzung Sucrose in festem Zustand, entweder in kristalliner Form oder gekörnter Form oder partikulärer Form oder in Form von getrocknetem Sirup umfasst oder im Wesentlichen daraus besteht.

13. Produkt gemäß einem von Ansprüchen 1 bis 12, **dadurch gekennzeichnet, dass** die Kernzusammensetzung einen einzelnen Sucrosekristall oder ein einzelnes Sucrosekorn oder einen einzelnen Sucrosepartikel umfasst oder im Wesentlichen daraus besteht.

14. Produkt gemäß einem von Ansprüchen 1 bis 12, **dadurch gekennzeichnet, dass** die Kernzusammensetzung Brocken von Sucrosekristallen oder Körnern oder Partikeln, aneinander oder an die Hülse geklebt oder nicht geklebt umfasst oder im Wesentlichen daraus besteht.

15. Produkt gemäß einem von Ansprüchen 1 bis 11, **dadurch gekennzeichnet, dass** die Kernzusammensetzung Sucrose in flüssigem oder halbfestem Zustand entweder als Gel oder in einer gesättigten Lösung oder in einer ungesättigten Lösung umfasst oder im Wesentlichen daraus besteht.

16. Produkt gemäß einem von Ansprüchen 1 bis 15, **dadurch gekennzeichnet, dass** die Kernzusammensetzung raffinierte Sucrose umfasst oder im Wesentlichen daraus besteht.

17. Produkt gemäß einem von Ansprüchen 1 bis 15, **dadurch gekennzeichnet, dass** die Kernzusammensetzung unraffinierte oder halbraffinierte oder Melasse-verwandte Sucrose in fester Form umfasst oder im Wesentlichen daraus besteht.

18. Produkt gemäß einem von Ansprüchen 1 bis 17, **dadurch gekennzeichnet, dass** die Kernzusammensetzung Sucrose, erhalten durch enzymatische Umsetzungen oder synthetisch, umfasst oder im Wesentlichen daraus besteht.

19. Produkt gemäß einem von Ansprüchen 1 bis 18, worin mindestens ein Ballaststoff aus natürlichen Quellen wie Pflanze, Bakterie, Hefe, Pilz, Tier erhalten ist.

20. Produkt gemäß einem von Ansprüchen 1 bis 18, worin mindestens einer der Ballaststofftypen künstlich hergestellt oder aus genetisch manipulierten lebenden Quellen oder durch chemische Manipulation von Kohlenhydraten erhalten ist.

21. Produkt gemäß einem von Ansprüchen 1 bis 20, worin mindestens einer der Ballaststofftypen aus vielfachen Quellen erhalten ist.

22. Produkt gemäß einem von Ansprüchen 5 bis 21, **dadurch gekennzeichnet, dass** besagtes pflanzliches Extrakt ebenfalls mindestens einen Teil der Ballaststoffe und/oder Thiamin und/oder Riboflavin und/oder Niacin und/oder Calcium umfasst.

23. Produkt gemäß einem von Ansprüchen 1 bis 22, **dadurch gekennzeichnet, dass** die Produktzusammensetzung ferner mindestens einen oder mehrere zusätzliche Bestandteile, ausgewählt aus der Gruppe von Aminosäuren, Enzymen, allen Arten von Vitaminen und Vitamin-Vorläufern (einschließlich Antioxidationsmitteln), Zuckeralkoholen (z.B. Sorbitol, Mannitol) und Zuckern in Mannigfaltigkeit (Monosaccharide (z.B. Glucose, Fructose, Galactose, Arabinose), Disaccharide (z.B. Sucrose, Maltose) und Polysaccharide) umfasst.

24. Produkt gemäß einem von Ansprüchen 1 bis 23, **dadurch gekennzeichnet, dass** die Produktzusammensetzung ferner mindestens einen oder mehrere zusätzliche Bestandteile, ausgewählt aus der Gruppe von Farbindikatoren, einschließlich pH-Indikatoren, Farbstoffen und aromatischen Stoffen umfasst.

25. Produkt gemäß einem von Ansprüchen 1 bis 24, **dadurch gekennzeichnet, dass** das Produkt ferner mindestens einen oder mehrere zusätzliche Bestandteile umfasst, ausgewählt aus der Gruppe der pharmazeutischen und/oder Gesundheit verbessernden Wirkstoffe und/oder Nutrifikations-/Verstärkungsmittel.

26. Produkt gemäß einem von Ansprüchen 1 bis 25, **dadurch gekennzeichnet, dass** der lösliche Ballaststoffbestandteil, insbesondere Beta-Glucan, von entweder Haferprodukten, Gerste oder Flohsamenhülse abgeleitet ist.

27. Produkt gemäß einem von Ansprüchen 5 bis 26, worin das Antioxidationsmittel ein Carotinoid oder eine phenolische Verbindung oder eine Anthocyanin oder ein Mineral oder ein (anderes) Flavonoid oder eine Aminosäure oder eine Liponsäure ist.

28. Produkt gemäß einem von Ansprüchen 23 bis 27, worin der Zuckeralkohol Sorbitol, insbesondere von Backpflaume ist.

29. Produkt gemäß einem von Ansprüchen 1 bis 28, worin die Phytonährstoffe ausgewählt sind aus einem oder mehreren der folgenden Mineralien: Carotinoide, Flavonoide (Polyphenole) einschließlich Isoflavone, Inositol-Phosphate (Phytate), Lignane (Phytoestrogene), Isothiocyanate und Indole, Phenole, Saponine, Sulfide und Thiole, Terpene.

30. Produkt gemäß einem von Ansprüchen 1 bis 29, **dadurch gekennzeichnet, dass** die Kernzusammensetzung mindestens teilweise durch die Hülsenzusammensetzung eingekapselt ist oder die Kernzusammensetzung in ein die Hülsenzusammensetzung umfassendes essbares Gehäuse verpackt ist.

31. Produkt gemäß einem von Ansprüchen 1 bis 29, **dadurch gekennzeichnet, dass** der Kern und die Hülse auf solche Weise aneinander gebunden sind, dass weder Kern, noch Hülse sich unabhängig voneinander bewegen können.

32. Produkt gemäß einem von Ansprüchen 1 bis 29, **dadurch gekennzeichnet, dass** der Kern und die Hülse nicht auf solche Weise aneinander gebunden sind, dass der Kern und die Hülse sich unabhängig voneinander bewegen können.

33. Produkt gemäß einem von Ansprüchen 1 bis 32, **dadurch gekennzeichnet, dass** die Hülsenzusammensetzung auf die Kernzusammensetzung durch Nass- oder Trockenüberzug der Hülsenzusammensetzung auf die nasse oder trockene Kernzusammensetzung aufgetragen wird.

34. Produkt gemäß einem von Ansprüchen 1 bis 33, **dadurch gekennzeichnet, dass** mindestens ein anderer wesentlicher Bestandteil der Produktzusammensetzung als Sucrose aus Nebenprodukten von anderen Industrien wie Getränke- oder Nahrungsmittelindustrien z.B. Bierindustrie oder Stärkeindustrie erhalten ist.

35. Produkt gemäß einem von Ansprüchen 1 bis 34, **dadurch gekennzeichnet, dass** die Produktzusammensetzung ferner mindestens einen natürlichen oder künstlichen Süßstoff enthält.

36. Produkt gemäß einem von Ansprüchen 1 bis 15 oder 17 bis 35, **dadurch gekennzeichnet, dass** der Kern weniger raffinierten Zucker, umfassend Sirup und oder Melasse oder ein Gemisch aus hochgradig raffiniertem Zucker und Sirup und/oder Melasse umfasst oder daraus hergestellt ist.

37. Produkt gemäß einem von Ansprüchen 1 bis 36, worin der unlösliche und/oder lösliche Ballaststoff aus der ursprünglichen Quelle des Zuckers erhalten werden.

38. Verfahren zum Herstellen eines Produkts wie in einem von Ansprüchen 1 bis 37 beansprucht, welches die folgenden Schritte umfasst:
(a) Vorsehen einer Kernzusammensetzung, welche Sucrose umfasst,
(b) Kontaktieren der Kernzusammensetzung mit einer Hülsenzusammensetzung, welche mindestens eine Ballaststoffzusammensetzung umfasst, um die Hülsenzusammensetzung auf die Kernzusammensetzung aufzutragen, so dass die Kernzusammensetzung mindestens teilweise von der Hülsenzusammensetzung umgeben ist.

39. Verfahren zum Herstellen eines Produkts wie in einem von Ansprüchen 1 bis 37 beansprucht, welches die folgenden Schritte umfasst:
a) Vorsehen einer Kernzusammensetzung, welche Sucrose, vorzugsweise raffinierte Sucrose in kristalliner Form umfasst
b) Herstellung eines Extrakts, vorzugsweise aus einer pflanzlichen Quelle in gemahlener oder zerstoßener Form wie Getreidemehl durch Mischen mit kaltem Wasser (z.B. 0 bis 4°C), Eis/Wasser-Gemisch oder gesprühtem kalten Wasser, Trennung eines Flüssigkeitsüberstands und eines (rückständigen) Filtrats durch einen Membranfilter oder durch Zentrifugation
c) vorteilhafterweise, aber gegebenenfalls, Extrahieren von mehr löslichen Fasern aus dem Filtrat unter Verwendung des Flüssigkeitsüberstands als Verdünnungsmittel und vorzugsweise Homogenisieren, Membran-Filtrieren unter sanftem Druck und in RT
d) vorteilhafterweise, aber gegebenenfalls, Herstellung eines zweiten Extrakts aus einer keine Stärke oder wenig Stärke enthaltenden pflanzlichen Quelle (also keiner Stärke lagernden pflanzlichen Quelle) vorzugsweise in RT oder Blasen durch Mischen und/oder Homogenisieren in Wasserbasis
e) gegebenenfalls Mischen der Extrakte
g) Einkapseln des Sucrosekerns in eine feste Hülse, vorzugsweise mittels Umkristallisieren von Sucrose im hergestellten Extrakt, oder Einkapseln des Sucrosekerns in eine feste Hülse, hergestellt aus im Wesentlichen Ballaststoffen mittels Sprühen des Extrakts aus einem festen Punkt zum kontinuierlichen und zirkulierenden Zuckerfluss auf solche Weise, dass in jedem Durchgang Zuckerpartikel einmal mit einem dünnen Film versehen und sofort durch die Sprüh-Treibmittel trockene, warme Luft getrocknet werden und in jedem Durchgang der gleiche Zuckerpartikel wieder mit einer weiteren Schicht des dünnen Filmüberzugs besprüht wird, bis die gewünschten Produktspezifikationen erreicht sind
i) gegebenenfalls Recycling des Wassers und unter Vakuum gesetzten Dampfes, unter Verwendung von minimaler Erwärmung, kurzer Prozesszeit, keinen chemischen Extraktionstechniken, daher Erzeugen von minimaler Umweltwirkung.

40. Essbares Produkt zur Verwendung als Ersatz für oder alternatives Produkt zu Sucrose, insbesondere kristalliner Sucrose wie Tafelzucker, wobei besagtes Produkt eine Sucrose umfassende Kernzusammensetzung und eine Hülsen- oder Überzugszusammensetzung umfasst, welche mindestens einen Ballaststoffbestandteil umfasst, worin die Kernzusammensetzung mindestens teilweise durch die Hülsenzusammensetzung überzogen oder eingekapselt ist, wobei besagtes Produkt einen niedrigeren glykämischen Index hat als die entsprechende Mengen an reiner raffinierter Sucrose.

41. Produkt gemäß Anspruch 40, worin besagtes Produkt als ein Zusatzstoff zu oder Inhaltsstoff von festem oder flüssigem Nahrungsmittel wie Kaffee, Tee oder anderen Getränken, Brot, Süßigkeiten, kalten und warmen Mahlzeiten, als Süßungsmittel oder Ähnliches verwendet wird.

42. Produkt gemäß Anspruch 40 oder Anspruch 41, worin besagtes Produkt ein wie in Anspruch 1 bis 37 definiertes Produkt ist.

43. Verfahren zum Herstellen eines essbaren Produkts, welches einen niedrigeren glykämischen Index als die entsprechende Menge an reiner raffinierter Sucrose hat, welches mindestens teilweise Überziehen einer Sucrose umfassenden Kernzusammensetzung mit einer mindestens einen Ballaststoff umfassenden Überzugszusammensetzung umfasst.

44. Verfahren nach Anspruch 43, worin besagter Ballaststoff ausgewählt ist aus löslichem Ballaststoff und/oder unlöslichem Ballaststoff.

45. Verfahren nach Anspruch 43 oder Anspruch 44, worin besagter Ballaststoff ein natürlicher Ballaststoff ist.

46. Verfahren nach einem von Ansprüchen 43-45, worin die Zusammensetzung ferner Phytonährstoffe und/oder Mineralien umfasst.

47. Verfahren nach einem von Ansprüchen 43-46, worin in der ursprünglichen Quelle des Zuckers vorhandene Bestandteile abgesehen von Sucrose in der Überzugszusammensetzung vorhanden sind.

48. Verfahren nach einem von Ansprüchen 43-47, worin der unlösliche und/oder lösliche Ballaststoff aus der ursprünglichen Quelle des Zuckers erhalten werden.

## Revendications

1. Produit comestible dissolvable comprenant une coque solide encapsulant au moins partiellement un noyau comprenant du saccharose, la composition du produit comprenant en outre des fibres alimentaires solubles, des fibres alimentaires non solubles, des phyto-nutriments et des minéraux, ladite coque solide comprenant au moins une composition de fibres alimentaires, qui a un indice glycémique inférieur à celui de la quantité correspondante de saccharose raffiné pur.

2. Produit selon la revendication 1, dans lequel les composants présents dans la source initiale du sucre en dehors du saccharose sont présents dans le produit comestible.

3. Produit selon la revendication 1 ou la revendication 2, dans lequel ledit minéral est choisi dans le groupe de minéraux : phosphore, sodium, potassium, chlore, magnésium, manganèse, zinc, fer, cuivre, iode, sélénium et/ou chrome.

4. Produit selon l'une quelconque des revendication 1 à 3, comprenant en outre au moins une ou plusieurs vitamines supplémentaires choisies dans le groupe de vitamines comprenant les vitamines A, D, E, K, C, B6, B12, biotine, folate et acide pantothénique ou leurs précurseurs et/ou PABA, inositol et choline.

5. Produit selon la revendication 4, **caractérisé en ce que** ledit produit comprend en outre un agent anti-oxydant comestible ou un extrait neutre, de préférence, un extrait végétal présentant une capacité anti-oxydante, d'au moins une source végétale unique.

6. Produit selon la revendication 5, **caractérisé en ce que** la source végétale est choisie parmi les légumes, les légumineuses, les fruits, les produits à grains, les noix et les feuilles.

7. Procédé selon l'une quelconque des revendications 1 à 6, **caractérisé en ce que** ladite capacité d'absorption de radical oxygène totale n'est pas inférieure à 1 unité ORAC = 1 micromole de Trolox ou un équivalent d'acide gallique/g.

8. Produit selon l'une quelconque des revendications 1 à 7, **caractérisé en ce que** ledit produit comprend en outre au moins de la thiamine ou un équivalent non inférieur à 0,02 mg/1000 Kjoule, de la riboflavine ou un équivalent non inférieur à 0,03 mg/100 Kjoule et de la niacine ou un équivalent non inférieur à 0,04 mg/1000 Kjoule et/ou du calcium non inférieur à 5 mg/g de teneur totale en fibres alimentaires.

9. Produit selon l'une quelconque des revendications 1 à 8, **caractérisé en ce que** la teneur totale en fibres alimentaires n'est pas inférieure à 1 % de la teneur en sucre du produit.

10. Produit selon l'une quelconque des revendications 1 à 9, **caractérisé en ce qu'**il a une valeur calorique inférieure à 4 calories par gramme de sa teneur en solides et une teneur totale en lipides inférieure à 2 % en poids par poids de sa teneur totale en solides.

11. Produit selon l'une quelconque des revendications 1 à 10, **caractérisé en ce que** la composition de fibres alimentaires comprend au moins un ou plusieurs types choisis dans le groupe des hémicelluloses, des gommes, des pentosanes, des glucanes comprenant le bêta-glucane, des mucilages et de la pectine.

12. Produit selon l'une quelconque des revendications 1 à 11, **caractérisé en ce que** la composition du noyau comprend ou est constituée essentiellement de saccharose à l'état solide, sous forme cristalline, sous forme granulaire, sous forme particulaire ou sous forme de sirop sec.

13. Produit selon l'une quelconque des revendications 1 à 12, **caractérisé en ce que** la composition du noyau comprend ou est constituée essentiellement d'un cristal de saccharose unique ou d'un granulé de saccharose unique ou d'une particule de saccharose unique.

14. Produit selon l'une quelconque des revendications 1 à 12, **caractérisé en ce que** la composition du noyau comprend ou est constituée essentiellement de blocs de cristaux de saccharose ou de granulés ou de particules collés ou non collés les uns aux autres ou à la coquille.

15. Produit selon l'une quelconque des revendications 1 à 11, **caractérisé en ce que** la composition du noyau comprend ou est constituée essentiellement de saccharose à l'état liquide ou semi-solide, sous forme de gel ou de solution saturée ou de solution insaturée.

16. Produit selon l'une quelconque des revendications 1 à 15, **caractérisé en ce que** la composition de noyau comprend ou est constituée essentiellement de saccharose raffiné.

17. Produit selon l'une quelconque des revendications 1 à 15, **caractérisé en ce que** la composition de noyau comprend ou est constituée essentiellement de saccharose non raffiné ou semi-raffiné ou de saccharose sous forme solide associé à la mélasse.

18. Produit selon l'une quelconque des revendications 1 à 17, **caractérisé en ce que** la composition de noyau comprend ou est constituée essentiellement de saccharose obtenu par des réactions enzymatiques ou par synthèse.

19. Produit selon l'une quelconque des revendications 1 à 18, dans lequel au moins une fibre alimentaire est obtenue à partir de sources naturelles telles que des végétaux, des bactéries, des levures, des champignons, des animaux.

20. Produit selon l'une quelconque des revendications 1 à 18, dans lequel au moins l'un des types de fibres alimentaires est produit artificiellement ou obtenu à partir de sources vivantes génétiquement manipulées ou par manipulation chimique de glucides.

21. Produit selon l'une quelconque des revendications 1 à 20, dans lequel au moins l'un des types de fibres alimentaires est obtenu à partir de sources multiples.

22. Produit selon l'une quelconque des revendications 5 à 21, **caractérisé en ce que** ledit extrait végétal comprend également au moins une partie des fibres alimentaires et/ou de la thiamine et/ou de la riboflavine et/ou de la niacine et/ou du calcium.

23. Produit selon l'une quelconque des revendications 1 à 22, **caractérisé en ce que** la composition de produit comprend en outre au moins un ou plusieurs composants supplémentaires choisis dans le groupe comprenant les acides aminés, les enzymes, toutes sortes de vitamines et de précurseurs de vitamines (comprenant les agents anti-oxydants), les alcools de sucre (par exemple, le sorbitol, le mannitol) et les sucres divers (monosaccharides (par exemple, glucose, fructose, galactose, arabinose), les disaccharides (par exemple, saccharose, maltose) et les polysaccharides).

24. Produit selon l'une quelconque des revendications 1 à 23, **caractérisé en ce que** la composition de produit comprend en outre au moins un ou plusieurs composants supplémentaires choisis dans le groupe comprenant les indicateurs de couleur comprenant les indicateurs de pH, les agents colorants et les agents aromatiques.

25. Produit selon l'une quelconque des revendications 1 à 24, **caractérisé en ce que** la composition du produit comprend en outre au moins un ou plusieurs composants supplémentaires choisis dans le groupe des agents pharmaceutiques et/ou améliorant la santé et/ou des agents nutritifs/fortifiants.

26. Produit selon l'une quelconque des revendications 1 à 25, **caractérisé en ce que** le composant de fibres alimentaires solubles, en particulier le bêta-glucane, est dérivé d'un produit de l'avoine, d'orge ou d'enveloppe de psyllium.

27. Produit selon l'une quelconque des revendications 5 à 26 dans lequel l'agent anti-oxydant est un composé caroténoïde ou un composé phénolique ou une anthocyanine ou un minéral ou un (autre) flavonoïde ou un acide aminé ou un acide lipoïque.

28. Produit selon l'une quelconque des revendications 23 à 27, dans lequel l'alcool de sucre est le sorbitol, en particulier issu de pruneau.

29. Produit selon l'une quelconque des revendications 1 à 28, dans lequel les phytonutriments sont choisis parmi l'un ou plusieurs des minéraux suivants : caroténoïdes, flavonoïdes (polyphénols) comprenant les isoflavones, les phosphates d'inositol (phytates), les lignanes (phyto-oestrogènes), les isothiocyanates et les indoles, les phénols, les saponines, les sulfures et les thiols, les terpènes.

30. Produit selon l'une quelconque des revendications 1 à 29, **caractérisé en ce que** la composition de noyau est encapsulée par la composition de coque au moins partiellement ou la composition de noyau est empaquetée dans une coquille comestible comprenant la composition de coque.

31. Produit selon l'une quelconque des revendications 1 à 29, **caractérisé en ce que** le noyau et la coque sont fixés l'un à l'autre de telle manière que ni le noyau ni la coque ne peuvent se déplacer indépendamment l'un de l'autre.

32. Produit selon l'une quelconque des revendications 1 à 29, **caractérisé en ce que** le noyau et la coque ne sont pas fixés l'un à l'autre de sorte que le noyau et la coque peuvent se déplacer indépendamment l'un de l'autre.

33. Produit selon l'une quelconque des revendications 1 à 32, **caractérisé en ce que** la composition de coque est appliquée à la composition de noyau par revêtement à l'état humide ou sec de la composition de coque sur la composition de noyau mouillée ou sèche.

34. Produit selon l'une quelconque des revendications 1 à 33, **caractérisé en ce qu'**au moins un composant essentiel de la composition du produit autre que le saccharose est obtenu à partir de sous-produits d'autres industries telles que l'industrie des boissons et l'industrie alimentaire, par exemple, l'industrie de la bière ou l'industrie de l'amidon.

35. Produit selon l'une quelconque des revendications 1 à 34, **caractérisé en ce que** la composition de produit comprend en outre au moins un édulcorant naturel ou artificiel.

36. Produit selon l'une quelconque des revendications 1 à 15 ou 17 à 35, **caractérisé en ce que** le noyau comprend ou est constitué de sucre moins raffiné comprenant le sirop et/ou la mélasse ou un mélange de sucre hautement raffiné et de sirop et/ou mélasse.

37. Produit selon l'une quelconque des revendications 1 à 36, dans lequel les fibres alimentaires insolubles et/ou solubles sont obtenues à partir de la source initiale de sucre.

38. Procédé de préparation d'un produit selon l'une quelconque des revendications 1 à 37, comprenant les étapes suivantes :
(a) fournir une composition de noyau comprenant le saccharose,
(b) mettre en contact la composition de noyau avec une composition de coque comprenant au moins une composition de fibres alimentaires afin d'appliquer la composition de coque sur la composition de noyau de sorte que la composition de noyau soit au moins partiellement entourée par la composition de coque.

39. Procédé de préparation d'un produit selon l'une quelconque des revendications 1 à 37, comprenant les étapes suivantes :
a) fournir une composition de noyau comprenant le saccharose, de préférence le saccharose raffiné sous forme cristalline,
b) préparer un extrait, de préférence d'une source végétale sous une forme moulue ou broyée telle qu'une farine de céréales, en la mélangeant avec de l'eau froide (par exemple, de 0 à 4° C), un mélange glace/eau ou de l'eau froide pulvérisée, séparer un surnageant et un filtrat (résiduel) dans un filtre à membrane ou par centrifugation,
c) avantageusement, mais de façon optionnelle, extraire plus de fibres solubles du filtrat en utilisant le surnageant comme diluant et de préférence, une homogénéisation, un filtrage sur membrane sous pression réduite et à TA,
d) avantageusement, mais de façon optionnelle, préparer un second extrait d'une source végétale sans amidon ou contenant une faible proportion d'amidon (c'est-à-dire une source végétale ne stockant pas l'amidon), de préférence à TA ou insufflé par mélange et/ou homogénéisation dans une base aqueuse,
e) éventuellement, mélanger les extraits,
g) encapsuler le noyau de saccharose dans une coque solide, de préférence au moyen du saccharose recristallisé dans l'extrait préparé ou encapsuler le noyau de saccharose dans une coque solide constituée essentiellement de fibres alimentaires par pulvérisation de l'extrait à partir d'un point fixe dans le flux continu et circulant de sucre de telle sorte qu'à chaque passage, les particules de sucre soient enrobées d'un film mince et immédiatement séchées par l'air chaud et sec propulsé par pulvérisation , et à chaque passage, la même particule de sucre est revêtue à nouveau par pulvérisation avec une autre couche de revêtement de film mince jusqu'à ce que les spécifications souhaitées du produit soient obtenues,
i) éventuellement, recycler l'eau et la vapeur sous vide en utilisant un chauffage et un temps de processus minimaux, sans recourir à des techniques d'extraction chimique, entraînant ainsi un effet minimal sur l'environnement.

40. Produit comestible à utiliser en remplacement ou comme produit de substitution du saccharose, en particulier comme sucre de table analogue au saccharose cristallin, ledit produit comprenant une composition de noyau comprenant du saccharose et une composition de coque ou de revêtement comprenant au moins un composant de fibres alimentaires, ladite composition de noyau étant au moins partiellement revêtue ou encapsulée par la composition de coque, ledit produit ayant un indice glycémique inférieur à celui de la quantité correspondante de saccharose raffiné pur.

41. Produit selon la revendication 40, dans lequel ledit produit est utilisé comme additif ou ingrédient d'aliments solides ou liquides tels que le café, le thé et autres boissons, le pain, les sucreries, les repas froids et chauds et comme édulcorants ou analogues.

42. Produit selon la revendication 40 ou la revendication 41, dans laquelle ledit produit est un produit tel que défini dans les revendications 1 à 37.

43. Procédé de préparation d'un produit comestible qui présente un indice glycémique inférieur à celui de la quantité correspondante de saccharose raffiné pur comprenant le revêtement au moins partiellement d'une composition de noyau comprenant du saccharose, avec une composition de revêtement comprenant au moins une fibre alimentaire.

44. Procédé selon la revendication 43, dans lequel ladite fibre alimentaire est choisie parmi les fibres alimentaires solubles et/ou les fibres alimentaires insolubles.

45. Procédé selon la revendication 43 ou la revendication 44, dans lequel ladite fibre alimentaire est une fibre alimentaire naturelle.

46. Procédé selon l'une quelconque des revendications 43 à 45, dans lequel la composition comprend en outre des phytonutriments et/ou des minéraux.

47. Procédé selon l'une quelconque des revendications 43 à 46, dans lequel les composants présents dans la source initiale de sucre en dehors du saccharose sont présents dans la composition de revêtement.

48. Procédé selon l'une quelconque des revendications 43 à 47, dans lequel les fibres alimentaires insolubles et/ou solubles sont obtenues à partir de la source initiale de sucre.
